# EUROPÄISCHE PATENTSCHRIFT

(11) **EP 3 310 860 B1**
(45) Veröffentlichungstag und Bekanntmachung des Hinweises auf die Patenterteilung: **17.10.2018**
(21) Anmeldenummer: 16729261.4
(22) Anmeldetag: 15.06.2016
(51) Int. Cl.: C08L 83/04

(54) **ZYKLENARME QUARZHALTIGE SILICONZUSAMMENSETZUNGEN**
QUARTZ-CONTAINING SILICONE COMPOSITIONS WHICH ARE LOW IN CYCLIC COMPOUNDS
COMPOSITIONS DE SILICONE CONTENANT DU QUARTZ ET PAUVRES EN CYCLES

(30) Priorität: 17.06.2015 DE 102015211172
(43) Veröffentlichungstag der Anmeldung: 25.04.2018
(73) Patentinhaber: Wacker Chemie AG, 81737 München (DE)
(72) Erfinder: KÖLLNBERGER, Andreas, 84375 Kirchdorf (DE)
(74) Vertreter: Mieskes, Klaus Theoderich
(86) Internationale Anmeldenummer: PCT/EP2016/063703
(87) Internationale Veröffentlichungsnummer: WO 2016/202833

(56) Entgegenhaltungen:
- EP-A1- 2 206 737
- US-A- 5 882 467

## Beschreibung

Die vorliegende Erfindung betrifft zyklenarme quarzhaltige Siliconzusammensetzungen sowie ein Verfahren zu deren Herstellung.

Siliconzusammensetzungen, die als Füllstoff Quarzmehl enthalten sowie ihre Herstellverfahren, sind seit langem im Stand der Technik bekannt.

EP2206737 beschreibt ein Verfahren zur kontinuierlichen Herstellung von hochviskosen Siliconmischungen mit Hilfe einer Kneterkaskate. Als geeignete Füllstoffe werden auch Quarzmehle angegeben, ohne das Problem der Cyclenbildung zu berücksichtigen.

In EP1313598 und EP2032655 werden ebenfalls Compoundierverfahren beschrieben, welche als möglichen Füllstoff gemahlenen Quarz angeben.

In der kontinuierlichen Herstellung von Siliconmassen, welche in EP1110691 beschrieben wird, kann ebenfalls Quarz als Füllstoff verwendet werden, wobei das Augenmerk auf der Entflüchtigung der Massen liegt. Dabei werden Temperaturen zwischen 150 °C und 200 °C benötigt.

US6288143 benutzt ebenfalls Quarz als Füllstoff bei erhöhten Temperaturen, ohne auf das Problem der Cyclenbildung einzugehen. US5882467 offenbart gefüllte Siliconzusammensetzungen wobei Quarzmehl und Magnesiumhydroxid in einem einzigen Verfahrensschritt eingearbeitet werden.

Bei Untersuchungen zur Lagerstabilität von quarzhaltigen Siliconzusammensetzungen wurde festgestellt, dass sich während der Lagerung relativ schnell zyklische Verbindungen in nicht unerheblichem Ausmaß in den Massen bilden. Bei den zyklischen Verbindungen handelt es ich um das trimere Hexamethylcyclotrisiloxan (D3), das tetramere Octametehylcyclotetrasiloxan (D4), das pentamere Decamethylcyclopentasiloxan (D5) und das hexamere Tetradecamethylcyclohexasiloxan (D6), wobei sich die Häufigkeit/Ausmaß ihrer Bildung wie folgt darstellt D4 > D5 > D6 > D3. Wahrscheinlich zeigen die sauer-wirkenden Si-OH-Gruppen des Quarzmehls katalytische Aktivität, wodurch sich bei Polysiloxanen, die ebenfalls in diesen Zusammensetzungen enthalten sind, Abschleifungen bilden und diese als Zyklen abspalten. Erste Studien weisen darauf hin, dass zumindest ein Teil dieser zyklischen Verbindungen gesundheits- und umweltgefährdend sein können. So steht D4 im Verdacht Leberschäden und D5 Lungenschäden verursachen zu können. Da Siliconzusammensetzungen und deren Härtungsprodukte auch in viele Anwendungen gehen, die mit Nahrung oder dem menschlichen Körper in Berührung kommen, beispielsweise in Kosmetika und Silicongummi-Formteile wie beispielsweise Backformen, Schnuller, Atemmasken, Schläuche usw., ist die Entstehung von D3-D6 bei Lagerung von anwendungsfertigen, Quarzmehl-haltigen Siliconzusammensetzungen aus toxikologischer Sicht unerwünscht.

Aufgabe war daher, die Bereitstellung von quarzhaltigen Siliconzusammensetzungen mit stark verminderter Zyklenbildung während ihrer Lagerung, sowie eines Verfahrens zu deren Herstellung.

Überraschenderweise wird diese Aufgabe gelöst durch das erfindungsgemässe Verfahren zur Herstellung von quarzhaltigen Siliconzusammensetzungen, das dadurch gekennzeichnet ist, dass bei der Compoundierung stets 0,1 - 5 Gew.% mindestens einer basisch reagierenden Verbindung (Z) vollständig in zumindest einen Teil der anderen Komponenten homogen eingemischt wird und erst anschließend das Einarbeiten des speziellen Füllstoffs Quarzmehl (Y) erfolgt.

Ein wesentlicher Vorteil ist, dass es bei Lagerung der erfindungsgemäßen quarzhaltigen Siliconzusammensetzungen zu einer wesentlich geringeren Bildung der Zyklen D3 bis D6 kommt. Es ist dabei unwesentlich, ob die Herstellung kontinuierlich oder diskontinuierlich (batchweise) erfolgt. Es hat sich zudem gezeigt, dass auch die Art des Vernetzertyps und damit der Vernetzungsmechanismus keinen Einfluss hat, da sowohl kondensationsvernetzende, additionsvernetzende, peroxidinduziert vernetzende und photoinduziert vernetzende Siliconzusammensetzungen eine verminderte Zyklenbildung zeigen, wenn beim Compoundieren (Z) vollständig vor (Y) eingearbeitet wurde. Die Zusammensetzungen sind im Stand der Technik seit langem bekannt, daher war dieses Ergebnis sehr überraschend. Bei umgekehrter oder gleichzeitiger Einarbeitung zeigte sich dagegen kein solcher Effekt. Als erfindungswesentlicher Punkt ist somit für alle Vernetzertypen wichtig, dass die basisch reagierende Verbindung (Z) stets vollständig vor der Eincompoundierung des speziellen Füllstoffes Quarzmehl (Y) in zumindest einen Teil der anderen Komponenten der Zusammensetzung eingearbeitet wurde.

Ein weiterer Gegenstand ist das erfindungsgemäße Verfahren zur Herstellung von quarzhaltigen Siliconzusammensetzungen, dadurch gekennzeichnet, dass bei der Compoundierung stets 0,1 - 5 Gew.% der basisch reagierenden Verbindung (Z) vollständig in zumindest einen Teil der anderen Komponenten homogen eingemischt wird und erst anschließend das Einarbeiten des speziellen Füllstoffs Quarzmehl (Y) erfolgt.

Obwohl schon lange im Stand der Technik bekannt, erfolgt hier eine kurze Beschreibung geeigneter Siliconzusammensetzungen.

### Additionsvernetzende Siliconzusammensetzungen

Additionsvernetzende Siliconzusammensetzungen sind dem Fachmann seit langem bekannt. Im einfachsten Fall enthalten additionsvernetzende Siliconzusammensetzungen wenigstens ein Organopolysiloxan mit wenigstens zwei aliphatisch ungesättigten Gruppen im Molekül (z.B. Si-gebundene Vinylgruppen), sowie wenigstens ein Organohydrogenpolysiloxan mit zwei oder mehr SiH Gruppen im Molekül und wenigstens einen die Anlagerung von Si-gebundenen Wasserstoff an aliphatische Mehrfachbindungen fördernden Katalysator, der auch als Hydrosilylierungskatalysator bezeichnet wird. Additionsvernetzende Siliconzusammensetzungen können in ihrer Konsistenz so eingestellt werden, dass man HTV (High Temperature Vulcanizing), LSR (Liquid Silicone Rubber) als auch RTV (Room Temperature Vulcanizing) Siliconelastomere herstellen kann. Dabei kann es sich um Ein-, Zwei- oder Mehrkomponentenzusammensetzungen handeln.

### Kondensationvernetzende Siliconzusammensetzung

Kondensationvernetzende Siliconzusammensetzungen sind dem Fachmann seit langem bekannt. Übliche Vertreter kondensationvernetzender Siliconzusammensetzungen tragen die Bezeichnungen RTV-1 (1-komponentig) und RTV-2 (2-komponentig). RTV-2 Massen enthalten in einer der Komponenten typischerweise wenigstens ein Organopolysiloxan mit endständigen Silanolgruppen sowie weitere Bestandteile wie Füllstoffe und Weichmacher. Die zweite Komponente (der Härter) enthält ein Vernetzersilan oder -siloxan in Kombination mit einem die Kondensationsreaktion beschleunigenden Katalysator sowie ggf. weiteren Bestandteilen wie Weichmachern. Als Vernetzersilan bzw. -siloxan finden vor allem die über mindestens drei hydrolysierbare Reste verfügenden Silane und Siloxane Verwendung. Die kondensationsvernetzenden RTV-1 Massen, die bei Zutritt von Luftfeuchtigkeit unter Abspaltung eines Hydrolyseproduktes zu einem Siliconelastomer aushärten, basieren auf der Möglichkeit, silanolendständige Organopolysiloxane mit einem mehrere hydrolysierbare Gruppen enthaltenden Vernetzer endblockieren zu können, ohne zugleich eine Vernetzung herbeizuführen. Als Vernetzer können alle über mindestens drei hydrolysierbare Gruppen verfügenden Silane oder deren Teilhydrolysate eingesetzt werden. Um eine ausreichend hohe Vernetzungsgeschwindigkeit zu erzielen, enthalten die meisten RTV-1 Massen einen Kondensationskatalysator, beispielsweise zinnorganische- und titanorganische Verbindungen oder Metallverbindungen der I. und II. Hauptgruppe.

### Peroxidinduziert vernetzende Siliconzusammensetzungen

Auch diese Zusammensetzungen sind dem Fachmann seit langem bekannt. Peroxidinduziert vernetzende Siliconzusammensetzungen enthalten im einfachsten Fall wenigstens ein Organopolysiloxan mit mindestens 2 vernetzungsfähigen Gruppen pro Molekül wie beispielsweise Methyl- oder Vinylgruppen und wenigstens einen geeigneten organischen Peroxid Katalysator. Sie werden üblicherweise als HTV-Massen hergestellt.

### Photoinduziert vernetzende Siliconzusammensetzungen

Auch diese Zusammensetzungen sind dem Fachmann seit langem bekannt. Photoinduziert vernetzende Siliconzusammensetzungen enthalten abhängig vom Reaktionsmechanismus mindestens einen photoaktivierbaren Intitiator oder Katalysator.

Alle die vorgenannten erfindungsgemäßen Siliconzusammensetzungen können zudem weitere Zusatzstoffe (W) enthalten, die auch bisher bei ihrer Herstellung eingesetzt wurden, wie beispielsweise verstärkende Füllstoffe, die sich von Quarzmehl (Y) unterscheiden, nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften, Dispergierhilfsmittel, Lösungsmittel, Haftvermittler, Pigmente, Farbstoffe, Weichmacher, organische Polymere, Hitzestabilisatoren, Lösungsmittel, Inhibitoren, Stabilisatoren, Fungizide, Duftstoffe, usw.

Die basisch reagierende Komponente (Z) kann eine organische oder anorganische Verbindung sein. Bevorzugt sind anorganische Verbindungen. Ihr pH-Wert beträgt 8 bis 14 gemessen in de-ionisiertem Wasser, als gesättigte Lösung, bevorzugt 9 bis 13. Beispiele für Komponente (Z) sind mit Wasser alkalisch reagierende Metallhydroxide, -carbonate oder -hydrogencarbonate, - phosphate, -hydrogenphosphate oder deren Mischungen. Bevorzugt sind Hydroxide und Carbonate der Alkali- und der Erdalkalimetalle oder deren Mischungen und besonders bevorzugt als (Z) sind Ca(OH)₂ sowie Mg(OH)₂ oder deren Mischungen. Es werden 0,1 - 5 Gew.%, bevorzugt 0,2 - 3 Gew.% (Z) vollständig vor (Y) in die erfindungsgemäße Siliconzusammensetzung eincompoundiert.

Quarzmehl (Y) ist ein seit langem bekannter gering verstärkender Füllstoff und wird bevorzugt in Mengen von mindestens 3 Gew.% und höchstens 90 Gew.% aus verschiedenen Gründen in den erfindungsgemäßen Siliconzusammensetzungen eingesetzt. Mögliche Gründe um Quarzmehle einzusetzen sind: erzielen thermischer Leitfähigkeit, Selbstentlüftung von Siliconmassen, reduzieren von Oberflächenklebrigkeiten, Haptikeffekte, Dichteerhöhung oder Kostenreduktion.

Die Art des eingesetzten Quarzmehls spielt keine Rolle für den weiter oben beschriebenen Effekt. Es kann sowohl hydrophiler als auch oberflächenbehandelter Quarz eingesetzt werden. Beispiele für Oberflächenbehandlungsmittel sind, ohne die Erfindung darauf zu beschränken, Aminosilane, Epoxysilane, Methacrylsilane, Silazane, Methylsilane, Trimethylsilane oder Vinylsilane.

Beispiele für Quarzmehle, welche den erfindungsgemäßen Siliconzusammensetzungen zugesetzt werden können, sind:
Quarztypen der Fa. Quarzwerke GmbH, Frechen, Deutschland, wie z.B. die SILBOND®-Typenreihe, z.B.: W 6 EST, W12 EST, W12 MST, 600 AST, 600 EST, 600 MST, 600 RST, 600 VST, 600 TST, 800 AST, 800 EST, 800 RST, 800 TST; die SIKRON®-Typenreihe wie z.B.: SH300, SF300, SH500, SF500, SF600, SF800. Auch die Quarzmehle anderer Hersteller sind für die Herstellung erfindungsgemäßer Zusammensetzungen geeignet, wie zum Beispiel die Produkte der Hoffmann Mineral GmbH, Neuburg; Deutschland oder der Busch Quarz GmbH, Schnaittenbach, Deutschland.
Der mittlere Teilchendurchmesser ist für den beschriebenen Effekt nicht verantwortlich, er kann aus diesem Grund in weiten Bereichen variieren, beispielsweise von D90 = 1 µm bis D90 = 200 µm. Auch andere Parameter haben keinen Einfluss und können ebenfalls in weiten Bereichen variiert werden, wie Schüttdichte, spezifische Oberfläche, Ölzahl, Farbwert, enthaltene Spurenelemente, etc.

Die durch das erfindungsgemässe Verfahren hergestellten quarzhaltigen Siliconzusammensetzungen können zur Herstellung von Silicongummiformteilen, in Kosmetischen Zusammensetzungen oder zur Beschichtung, oder als Vergussmassen benutzt werden.

### Beispiele:

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000hPa, und bei Raumtemperatur, also bei 25°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf eine Temperatur von 25°C. Die nachfolgenden Beispiele erläutern die Erfindung, ohne dabei beschränkend zu wirken. Die Bestimmung der Cyclengehalte erfolgt mit Hilfe einer kalibrierten Headspace-Gaschromatographie-Methode (HS-GC). D3 bedeutet Hexamethylcyclotrisiloxan, D4 bedeutet Octamethylcyclotetrasiloxan, D5 bedeutet Decamethylcyclopentasiloxan und D6 bedeutet Dodecamethylcyclohexasiloxan.

Die pH-Messung erfolgt in de-ionisiertem Wasser, als gesättigte Lösung, mittels eines geeichten pH-Meters.

### Beispiel 1

In einem Laborkneter der Stephan Werke Hameln, der mit einer ca. 500 ml fassenden, kühl- und beheizbaren Knetereinheit ausgestattet ist, werden 150 g α,ω-Divinylendständiges Polydimethylsiloxan mit einer mittleren Kettenlänge von 220 Einheiten vorgelegt. Bei Raumtemperatur werden 5 g Calciumdihydroxid Ca(OH)₂ der Fa. Schäfer, Type Precal 54 eingerührt (pH = 12,7 nach o.g. Methode bestimmt). Innerhalb von 10 Minuten werden portionsweise 340 g Quarzmehl der Fa. Quarzwerke GmbH, Type SIKRON SF 600 (hydrophile Type) portionsweise zugegeben und eingeknetet. Anschließend wird eine Stunde bei 100 °C Innentemperatur geknetet.

Nach der Herstellung der Mischung wurden folgende Gehalte bestimmt, die unter den jeweiligen Nachweisgrenzen lagen:
D3: < 80 ppm (Nachweisgrenze 80 ppm)
D4: < 60 ppm (Nachweisgrenze 60 ppm)
D5: < 100 ppm (Nachweisgrenze 100 ppm)
D6: < 250 ppm (Nachweisgrenze 250 ppm)

Die anschließende Lagerung erfolgt in verschlossenen PE-Dosen bei verschiedenen Temperaturen. Die Lagerung soll das Altern der Zusammensetzungen simulieren, wobei 50 °C eine beschleunigte, jedoch nicht unrealistische Alterungstemperatur darstellt. Eine Lagertemperatur der Produkte von 100 °C ist in der Praxis nicht zu erwarten, die Versuche zeigen zum einen die Temperaturabhängigkeit der Cyclenbildung und liefern bereits nach kurzer Lagerdauer Ergebnisse. Im Laborversuch kann für die Versuche mit 100 °C davon ausgegangen werden, dass durch Verdampfen der Cyclen durch Undichtigkeiten im Aufbewahrungsgefäß der Gehalt in der Mischung wieder etwas abnimmt, was an den Vergleichsbeispielen gut zu sehen ist.

Tabelle 1 zeigt die Messergebnisse der Lagerung der Zusammensetzung aus Beispiel 1 bei verschiedenen Temperaturen

**Tabelle 1**

| Lagertemp. | Lagerdauer | D3 [ppm] | D4 [ppm] | D5 [ppm] | D6 [ppm] |
|---|---|---|---|---|---|
| 25 °C | 1 Woche | < 80 | < 60 | < 100 | < 250 |
| 25 °C | 2 Wochen | < 80 | < 60 | < 100 | < 250 |
| 25 °C | 4 Wochen | < 80 | < 60 | < 100 | < 250 |
| 25 °C | 8 Wochen | < 80 | < 60 | < 100 | < 250 |
| 50 °C | 1 Woche | < 80 | < 60 | < 100 | < 250 |
| 50 °C | 2 Wochen | < 80 | < 60 | < 100 | < 250 |
| 50 °C | 4 Wochen | < 80 | 60 | < 100 | < 250 |
| 50 °C | 8 Wochen | < 80 | 90 | < 100 | < 250 |
| 100 °C | 1 Woche | 160 | 200 | < 100 | < 250 |
| 100 °C | 2 Wochen | 190 | 290 | < 100 | < 250 |
| 100 °C | 4 Wochen | 210 | 370 | < 100 | < 250 |
| 100 °C | 8 Wochen | 230 | 400 | < 100 | < 250 |

### Beispiel 2 (Vergleichsbeispiel 1)

In einem Laborkneter der Stephan Werke Hameln, der mit einer ca. 500 ml fassenden, kühl- und beheizbaren Knetereinheit ausgestattet ist, werden 150 g α,ω-Divinylendständiges Polydimethylsiloxan mit einer mittleren Kettenlänge von 220 Einheiten vorgelegt. Innerhalb von 10 Minuten werden portionsweise 340 g Quarzmehl der Fa. Quarzwerke GmbH, Type SIKRON SF 600 (hydrophile Type, pH = 12,7 nach o.g. Methode bestimmt) portionsweise zugegeben und eingeknetet. Anschließend wird eine Stunde bei 25 °C Innentemperatur geknetet.

Nach der Herstellung der Mischung wurden folgende Gehalte bestimmt:
D3: < 80 ppm (Nachweisgrenze 80 ppm)
D4: 90 ppm (Nachweisgrenze 60 ppm)
D5: < 100 ppm (Nachweisgrenze 100 ppm)
D6: < 250 ppm (Nachweisgrenze 250 ppm)

Tabelle 2 zeigt die Messergebnisse der Lagerung der Zusammensetzung aus Beispiel 2 bei verschiedenen Temperaturen

**Tabelle 2**

| Lagertemp. | Lagerdauer | D3 [ppm] | D4 [ppm] | D5 [ppm] | D6 [ppm] |
|---|---|---|---|---|---|
| 25 °C | 1 Woche | < 80 | 330 | < 100 | < 250 |
| 25 °C | 2 Wochen | < 80 | 470 | < 100 | < 250 |
| 25 °C | 4 Wochen | < 80 | 700 | 150 | < 250 |
| 25 °C | 8 Wochen | < 80 | 1170 | 310 | < 250 |
| 50 °C | 1 Woche | < 80 | 1810 | 620 | < 250 |
| 50 °C | 2 Wochen | 80 | 4230 | 1560 | 530 |
| 50 °C | 4 Wochen | 90 | 6560 | 2490 | 660 |
| 50 °C | 8 Wochen | 90 | 8650 | 3720 | 1210 |
| 100 °C | 1 Woche | 250 | 1001 | 5910 | 2680 |
| 100 °C | 2 Wochen | 210 | 9350 | 5570 | 3300 |
| 100 °C | 4 Wochen | 200 | 8610 | 5200 | 3400 |
| 100 °C | 8 Wochen | 140 | 6500 | 4450 | 3480 |

### Beispiel 3 (Vergleichsbeispiel 2)

In einem Laborkneter der Stephan Werke Hameln, der mit einer ca. 500 ml fassenden, kühl- und beheizbaren Knetereinheit ausgestattet ist, werden 150 g α,ω-Divinylendständiges Polydimethylsiloxan mit einer mittleren Kettenlänge von 220 Einheiten vorgelegt. Innerhalb von 10 Minuten werden portionsweise 340 g Quarzmehl der Fa. Quarzwerke GmbH, Type SIKRON SF 600 (hydrophile Type) portionsweise zugegeben und eingeknetet. Anschließend wird eine Stunde bei 100 °C Innentemperatur geknetet.

Nach der Herstellung der Mischung wurden folgende Gehalte bestimmt:
D3: 180 ppm (Nachweisgrenze 80 ppm)
D4: 520 ppm (Nachweisgrenze 60 ppm)
D5: 210 ppm (Nachweisgrenze 100 ppm)
D6: < 250 ppm (Nachweisgrenze 250 ppm)

Tabelle 3 zeigt die Messergebnisse der Lagerung der Zusammensetzung aus Beispiel 3 bei verschiedenen Temperaturen

**Tabelle 3**

| Lagertemp. | Lagerdauer | D3 [ppm] | D4 [ppm] | D5 [ppm] | D6 [ppm] |
|---|---|---|---|---|---|
| 25 °C | 1 Woche | < 80 | 690 | 290 | < 250 |
| 25 °C | 2 Wochen | < 80 | 1220 | 440 | < 250 |
| 25 °C | 4 Wochen | < 80 | 2300 | 770 | 250 |
| 25 °C | 8 Wochen | < 80 | 4090 | 1440 | 400 |
| 50 °C | 1 Woche | 80 | 1790 | 670 | 280 |
| 50 °C | 2 Wochen | 80 | 3540 | 1320 | 500 |
| 50 °C | 4 Wochen | 90 | 6120 | 2280 | 750 |
| 50 °C | 8 Wochen | 90 | 7910 | 2960 | 890 |
| 100 °C | 1 Woche | 230 | 6190 | 4170 | 2320 |
| 100 °C | 2 Wochen | 200 | 6060 | 4070 | 2280 |
| 100 °C | 4 Wochen | 170 | 5560 | 3890 | 2000 |
| 100 °C | 8 Wochen | 100 | 3060 | 2860 | 1760 |

### Beispiel 4

In einem Laborkneter der Stephan Werke Hameln, der mit einer ca. 500 ml fassenden, kühl- und beheizbaren Knetereinheit ausgestattet ist, werden 150 g α,ω-Divinylendständiges Polydimethylsiloxan mit einer mittleren Kettenlänge von 220 Einheiten vorgelegt. Bei Raumtemperatur werden 5 g Calciumdihydroxid Ca(OH)₂ der Fa. Schäfer, Type Precal 54 eingerührt; (pH = 12,7 nach o.g. Methode bestimmt). Innerhalb von 10 Minuten werden portionsweise 340 g Quarzmehl der Fa. Quarzwerke GmbH, Type SILBOND 600 TST (hydrophobe Type) portionsweise zugegeben und eingeknetet. Anschließend wird eine Stunde bei 100 °C Innentemperatur geknetet.

Nach der Herstellung der Mischung wurden folgende Gehalte bestimmt:
D3: < 80 ppm (Nachweisgrenze 80 ppm)
D4: < 60 ppm (Nachweisgrenze 60 ppm)
D5: < 100 ppm (Nachweisgrenze 100 ppm)
D6: < 250 ppm (Nachweisgrenze 250 ppm)

Tabelle 4 zeigt die Messergebnisse der Lagerung der Zusammensetzung aus Beispiel 4 bei verschiedenen Temperaturen

**Tabelle 4**

| Lagertemp. | Lagerdauer | D3 [ppm] | D4 [ppm] | D5 [ppm] | D6 [ppm] |
|---|---|---|---|---|---|
| 25 °C | 1 Woche | < 80 | < 60 | < 100 | < 250 |
| 25 °C | 2 Wochen | < 80 | < 60 | < 100 | < 250 |
| 25 °C | 4 Wochen | < 80 | < 60 | < 100 | < 250 |
| 25 °C | 8 Wochen | < 80 | < 60 | < 100 | < 250 |
| 50 °C | 1 Woche | < 80 | < 60 | < 100 | < 250 |
| 50 °C | 2 Wochen | < 80 | < 60 | < 100 | < 250 |
| 50 °C | 4 Wochen | < 80 | < 60 | < 100 | < 250 |
| 50 °C | 8 Wochen | < 80 | < 60 | < 100 | < 250 |
| 100 °C | 1 Woche | < 80 | < 60 | < 100 | < 250 |
| 100 °C | 2 Wochen | < 80 | 100 | < 100 | < 250 |
| 100 °C | 4 Wochen | 120 | 150 | < 100 | < 250 |
| 100 °C | 8 Wochen | 160 | 280 | < 100 | < 250 |

### Beispiel 5 (Vergleichsbeispiel 3)

In einem Laborkneter der Stephan Werke Hameln, der mit einer ca. 500 ml fassenden, kühl- und beheizbaren Knetereinheit ausgestattet ist, werden 150 g α,ω-Divinylendständiges Polydimethylsiloxan mit einer mittleren Kettenlänge von 220 Einheiten vorgelegt. Innerhalb von 10 Minuten werden portionsweise 340 g Quarzmehl der Fa. Quarzwerke GmbH, Type SILBOND 600 TST (hydrophobe Type) portionsweise zugegeben und eingeknetet. Anschließend wird eine Stunde bei 100 °C Innentemperatur geknetet.

Nach der Herstellung der Mischung wurden folgende Gehalte bestimmt:
D3: 180 ppm (Nachweisgrenze 80 ppm)
D4: 520 ppm (Nachweisgrenze 60 ppm)
D5: 210 ppm (Nachweisgrenze 100 ppm)
D6: < 250 ppm (Nachweisgrenze 250 ppm)

Tabelle 5 zeigt die Messergebnisse der Lagerung der Zusammensetzung au Beispiel 5 bei verschiedenen Temperaturen

**Tabelle 5**

| Lagertemp. | Lagerdauer | D3 [ppm] | D4 [ppm] | D5 [ppm] | D6 [ppm] |
|---|---|---|---|---|---|
| 25 °C | 1 Woche | < 80 | 690 | 290 | < 250 |
| 25 °C | 2 Wochen | < 80 | 1220 | 440 | < 250 |
| 25 °C | 4 Wochen | < 80 | 2300 | 770 | 250 |
| 25 °C | 8 Wochen | < 80 | 4090 | 1440 | 400 |
| 50 °C | 1 Woche | 80 | 1790 | 670 | 280 |
| 50 °C | 2 Wochen | 80 | 3540 | 1320 | 500 |
| 50 °C | 4 Wochen | 90 | 6120 | 2280 | 750 |
| 50 °C | 8 Wochen | 90 | 7910 | 2960 | 890 |
| 100 °C | 1 Woche | 230 | 6190 | 4170 | 2320 |
| 100 °C | 2 Wochen | 200 | 6060 | 4070 | 2280 |
| 100 °C | 4 Wochen | 170 | 5560 | 3890 | 2000 |
| 100 °C | 8 Wochen | 90 | 3060 | 2860 | 1760 |

### Beispiel 6

In einem Laborkneter der Stephan Werke Hameln, der mit einer ca. 500 ml fassenden, kühl- und beheizbaren Knetereinheit ausgestattet ist, werden 150 g α,ω-Silanolendständiges Polydimethylsiloxan mit einer mittleren Kettenlänge von 220 Einheiten vorgelegt. Bei Raumtemperatur werden 5 g Magnesiumdihydroxid Mg(OH)₂ ANKERMAG B 21 eingerührt; (pH = 10,4 nach o.g. Methode bestimmt). Innerhalb von 10 Minuten werden portionsweise 340 g Quarzmehl der Fa. Quarzwerke GmbH, Type SILBOND 600 TST (hydrophobe Type) portionsweise zugegeben und eingeknetet. Anschließend wird eine Stunde bei 100 °C Innentemperatur geknetet.

Nach der Herstellung der Mischung wurden folgende Gehalte bestimmt:
D3: < 80 ppm (Nachweisgrenze 80 ppm)
D4: < 60 ppm (Nachweisgrenze 60 ppm)
D5: < 100 ppm (Nachweisgrenze 100 ppm)
D6: < 250 ppm (Nachweisgrenze 250 ppm)

Tabelle 6 zeigt die Messergebnisse der Lagerung der Zusammensetzung aus Beispiel 6 bei verschiedenen Temperaturen

**Tabelle 6**

| Lagertemp. | Lagerdauer | D3 [ppm] | D4 [ppm] | D5 [ppm] | D6 [ppm] |
|---|---|---|---|---|---|
| 25 °C | 1 Woche | < 80 | < 60 | < 100 | < 250 |
| 25 °C | 2 Wochen | < 80 | < 60 | < 100 | < 250 |
| 25 °C | 4 Wochen | < 80 | < 60 | < 100 | < 250 |
| 25 °C | 8 Wochen | < 80 | < 60 | < 100 | < 250 |
| 50 °C | 1 Woche | < 80 | < 60 | < 100 | < 250 |
| 50 °C | 2 Wochen | < 80 | < 60 | < 100 | < 250 |
| 50 °C | 4 Wochen | < 80 | < 60 | < 100 | < 250 |
| 50 °C | 8 Wochen | < 80 | 80 | < 100 | < 250 |
| 100 °C | 1 Woche | < 80 | 80 | < 100 | < 250 |
| 100 °C | 2 Wochen | 100 | 100 | < 100 | < 250 |
| 100 °C | 4 Wochen | 140 | 170 | < 100 | < 250 |
| 100 °C | 8 Wochen | 200 | 350 | < 100 | < 250 |

### Beispiel 7

In einem Laborkneter der Stephan Werke Hameln, der mit einer ca. 500 ml fassenden, kühl- und beheizbaren Knetereinheit ausgestattet ist, werden 150 g (α,ω-Divinylendständiges Polydimethylsiloxan mit einer mittleren Kettenlänge von 220 Einheiten vorgelegt. Bei Raumtemperatur werden 5 g Magnesiumdihydroxid Mg(OH)₂ ANKERMAG B 21 eingerührt; (pH = 10,4 nach o.g. Methode bestimmt). Innerhalb von 10 Minuten werden portionsweise 340 g Quarzmehl der Fa. Quarzwerke GmbH, Type SILBOND 600 TST (hydrophobe Type) portionsweise zugegeben und eingeknetet. Anschließend wird eine Stunde bei 100 °C Innentemperatur geknetet.

Nach der Herstellung der Mischung wurden folgende Gehalte bestimmt:
D3: < 80 ppm (Nachweisgrenze 80 ppm)
D4: < 60 ppm (Nachweisgrenze 60 ppm)
D5: < 100 ppm (Nachweisgrenze 100 ppm)
D6: < 250 ppm (Nachweisgrenze 250 ppm)

Tabelle 7 zeigt die Messergebnisse der Lagerung der Zusammensetzung aus Beispiel 7 bei verschiedenen Temperaturen

**Tabelle 7**

| Lagertemp. | Lagerdauer | D3 [ppm] | D4 [ppm] | D5 [ppm] | D6 [ppm] |
|---|---|---|---|---|---|
| 25 °C | 1 Woche | < 80 | < 60 | < 100 | < 250 |
| 25 °C | 2 Wochen | < 80 | < 60 | < 100 | < 250 |
| 25 °C | 4 Wochen | < 80 | < 60 | < 100 | < 250 |
| 25 °C | 8 Wochen | < 80 | < 60 | < 100 | < 250 |
| 50 °C | 1 Woche | < 80 | < 60 | < 100 | < 250 |
| 50 °C | 2 Wochen | < 80 | < 60 | < 100 | < 250 |
| 50 °C | 4 Wochen | < 80 | < 60 | < 100 | < 250 |
| 50 °C | 8 Wochen | <80 | 80 | < 100 | < 250 |
| 100 °C | 1 Woche | < 80 | 80 | < 100 | < 250 |
| 100 °C | 2 Wochen | 100 | 100 | < 100 | < 250 |
| 100 °C | 4 Wochen | 140 | 170 | < 100 | < 250 |
| 100 °C | 8 Wochen | 200 | 350 | < 100 | < 250 |

### Beispiel 8

In einem Laborkneter der Stephan Werke Hameln, der mit einer ca. 500 ml fassenden, kühl- und beheizbaren Knetereinheit ausgestattet ist, werden 150 g α,ω-Divinylendständiges Polydimethylsiloxan mit einer mittleren Kettenlänge von 600 Einheiten vorgelegt. Bei Raumtemperatur werden 5 g Magnesiumdihydroxid Mg(OH)₂ ANKERMAG B 21 eingerührt; (pH = 10,4 nach o.g. Methode bestimmt). Innerhalb von 10 Minuten werden portionsweise 340 g Quarzmehl der Fa. Quarzwerke GmbH, Type SIKRON SF 600 portionsweise zugegeben und eingeknetet. Anschließend wird eine Stunde bei 100 °C Innentemperatur geknetet.

Nach der Herstellung der Mischung wurden folgende Gehalte bestimmt:
D3: < 80 ppm (Nachweisgrenze 80 ppm)
D4: < 60 ppm (Nachweisgrenze 60 ppm)
D5: < 100 ppm (Nachweisgrenze 100 ppm)
D6: < 250 ppm (Nachweisgrenze 250 ppm)

Tabelle 8 zeigt die Messergebnisse der Lagerung der Zusammensetzung aus Beispiel 8 bei verschiedenen Temperaturen.

**Tabelle 8**

| Lagertemp. | Lagerdauer | D3 [ppm] | D4 [ppm] | D5 [ppm] | D6 [ppm] |
|---|---|---|---|---|---|
| 25 °C | 1 Woche | < 80 | < 60 | < 100 | < 250 |
| 25 °C | 2 Wochen | < 80 | < 60 | < 100 | < 250 |
| 25 °C | 4 Wochen | < 80 | < 60 | < 100 | < 250 |
| 25 °C | 8 Wochen | < 80 | < 60 | < 100 | < 250 |
| 50 °C | 1 Woche | < 80 | < 60 | < 100 | < 250 |
| 50 °C | 2 Wochen | < 80 | < 60 | < 100 | < 250 |
| 50 °C | 4 Wochen | < 80 | < 60 | < 100 | < 250 |
| 50 °C | 8 Wochen | < 80 | < 60 | < 100 | < 250 |
| 100 °C | 1 Woche | < 80 | 100 | < 100 | < 250 |
| 100 °C | 2 Wochen | 80 | 130 | < 100 | < 250 |
| 100 °C | 4 Wochen | 150 | 200 | < 100 | < 250 |
| 100 °C | 8 Wochen | 220 | 380 | < 100 | < 250 |

## Patentansprüche

1. Verfahren zur Herstellung von quarzhaltigen Siliconzusammensetzungen, **dadurch gekennzeichnet, dass** bei der Compoundierung stets 0,1 - 5 Gew.% einer basisch reagierenden Verbindung (Z) vollständig in zumindest einen Teil der anderen Komponenten homogen eingemischt wird und erst anschließend das Einarbeiten des speziellen Füllstoffs Quarzmehl (Y) erfolgt.

2. Verfahren gemäß Anspruch 1, **dadurch gekennzeichnet, dass** die quarzhaltigen Siliconzusammensetzungen ausgesucht werden aus kondensationsvernetzenden, additionsvernetzenden, peroxidinduziert vernetzende und photoinduziert vernetzende Siliconzusammensetzungen.

3. Verfahren gemäß den Ansprüchen 1-2, **dadurch gekennzeichnet, dass** (Z) eine anorganische Verbindung ist, die einen pH von 8 bis 14 aufweist, gemessen mit einem geeichten pH-Meter als gesättigte Lösung in de-ionisiertem Wasser.

4. Verfahren gemäß den Ansprüchen 1-2, **dadurch gekennzeichnet, dass** (Z) ausgewählt wird aus der Gruppe enthaltend Hydroxide und Carbonate der Alkali- und der Erdalkalimetalle oder deren Mischungen.

5. Verfahren gemäß den Ansprüchen 1-2, **dadurch gekennzeichnet, dass** (Z) ausgewählt wird aus der Gruppen enthalten Ca(OH)₂ und Mg(OH)₂ oder deren Mischungen,

## Claims

1. Process for producing quartz-containing silicone compositions, **characterized in that** during compounding 0.1-5% by weight of an alkaline compound (Z) is always fully homogenously incorporated into at least a portion of the other components and incorporation of the special filler quartz flour (Y) is carried out only subsequently.

2. Process according to Claim 1, **characterized in that** the quartz-containing silicone compositions are selected from condensation-crosslinking, addition-crosslinking, peroxide-induced-crosslinking and photo-induced-crosslinking silicone compositions.

3. Process according to Claims 1-2, **characterized in that** (Z) is an inorganic compound having a pH of 8 to 14 measured with a suitable pH meter as a saturated solution in deionized water.

4. Process according to Claims 1-2, **characterized in that** (Z) is selected from the group containing hydroxides and carbonates of the alkali metals and of the alkaline earth metals or mixtures thereof.

5. Process according to Claims 1-2, **characterized in that** (Z) is selected from the groups containing Ca(OH)₂ and Mg(OH)₂ or mixtures thereof.

## Revendications

1. Procédé de fabrication de compositions de silicone contenant du quartz, **caractérisé en ce que**, lors du mélange, 0,1 à 5 % en poids d'un composé (Z) réagissant de manière basique est toujours incorporé en totalité de manière homogène dans au moins une partie des autres composants, et l'incorporation de la charge spéciale sous la forme de farine de quartz (Y) n'a lieu qu'ultérieurement.

2. Procédé selon la revendication 1, **caractérisé en ce que** les compositions de silicone contenant du quartz sont choisies parmi les compositions de silicone réticulant par condensation, réticulant par addition, à réticulation induite par un peroxyde et à réticulation photoinduite.

3. Procédé selon les revendications 1 à 2, **caractérisé en ce que** (Z) est un composé inorganique qui présente un pH de 8 à 14, mesuré avec un pH-mètre étalonné sous la forme d'une solution saturée dans de l'eau déionisée.

4. Procédé selon les revendications 1 à 2, **caractérisé en ce que** (Z) est choisi dans le groupe contenant les hydroxydes et les carbonates de métaux alcalins et alcalino-terreux ou leurs mélanges.

5. Procédé selon les revendications 1 à 2, **caractérisé en ce que** (Z) est choisi dans le groupe contenant Ca(OH)₂ et Mg(OH)₂ ou leurs mélanges.
